# EUROPEAN PATENT APPLICATION

(11) **EP 2 922 118 A1**
(43) Date of publication of application: **23.09.2015**
(21) Application number: 13855678.2
(22) Date of filing: 12.11.2013
(51) Int. Cl.: H01M 4/36, H01M 4/48, H01M 4/505, H01M 4/525

(54) **MANUFACTURING METHOD FOR ELECTRODE MATERIAL, ELECTRODE MATERIAL, AND ENERGY STORAGE DEVICE PROVIDED WITH SAID ELECTRODE MATERIAL**

(30) Priority: 13.11.2012 JP 2012249779
(71) Applicant: Nippon Chemi-Con Corporation, Tokyo 141-8605 (JP)
(72) Inventor: YONEKURA, Daisuke, Tokyo 141-8605 (JP); KUBOTA, Satoshi, Tokyo 141-8605 (JP); ISHIMOTO, Shuichi, Tokyo 141-8605 (JP); TAMAMITSU, Kenji, Tokyo 141-8605 (JP); NAOI, Katsuhiko, Fuchu-shi Tokyo 183-8538 (JP); NAOI, Wako, Kunitachi-shi Tokyo 186-0002 (JP)
(74) Representative: Willquist, Sofia Ellinor
(86) International application number: PCT/JP2013/080564
(87) International publication number: WO 2014/077247

(57) **Abstract**

Provided are a manufacturing method for an electrode material and an electric storage device with the electrode material improving its output performance by making a carbon material carry a metal compound which is an unstable crystal through a high-temperature reaction and by conjugating the a composite material under an atmosphere containing oxygen. A precursor of the metal compound is carried on the carbon material while the carbon material is nanoparticulated. The precursor of the metal compound is M_{β}Y_{γ} before containing lithium. The precursor of the metal compound is reacted to produce the metal compound. In this conjugating step, the precursor of the metal compound carried on the carbon material is synthesized and crystalized. As the method of synthesizing and crystalizing the precursor of the metal compound, a hydrothermal synthesis method for synthesizing a compound and growing its crystal is used, which is performed in the presence of high-pressure water vapor.

## Description

### FIELD OF THE INVENTION

The present invention relates to a manufacturing method for an electrode material consisting of a composite material of an electrode active material and a carbon material, and an electric storage device provided with the electrode material.

### BACKGROUND ART

Although carbon materials or the like which preserve and emit lithium are currently used as electrodes for lithium battery, there is a risk of decomposition of an electrolytic solution because their negative potential is lower than a reduction decomposition potential of hydrogen. Thus, as described in Patent Document 1 and Patent Document 2, use of lithium titanate, whose negative potential is higher than the reduction decomposition potential of hydrogen, is contemplated. However, there is a problem that lithium titanate has low output performance. Therefore, an attempt is being made to improve the output performance by an electrode in which lithium titanate is nanoparticulated and carried on carbon.

### RELATED TECHNICAL PATENT DOCUMENTS

### PATENT DOCUMENTS

[Patent Document 1] JP2007-160151 A
[Patent Document 2] JP2008-270795 A

### SUMMARY OF THE INVENTION

The inventions described in the above-mentioned Patent Documents are intended to obtain lithium titanate which is dispersed and carried on a carbon material by a method of promoting a chemical reaction by applying shearing stress and centrifugal force to a reactant in a revolving reaction container (generally called a mechanochemical reaction). In this case, for example titanium alkoxide and lithium acetate which are starting materials of lithium titanate, a carbon material such as carbon nanotube and ketjen black, acetic acid and the like are used as reactants.

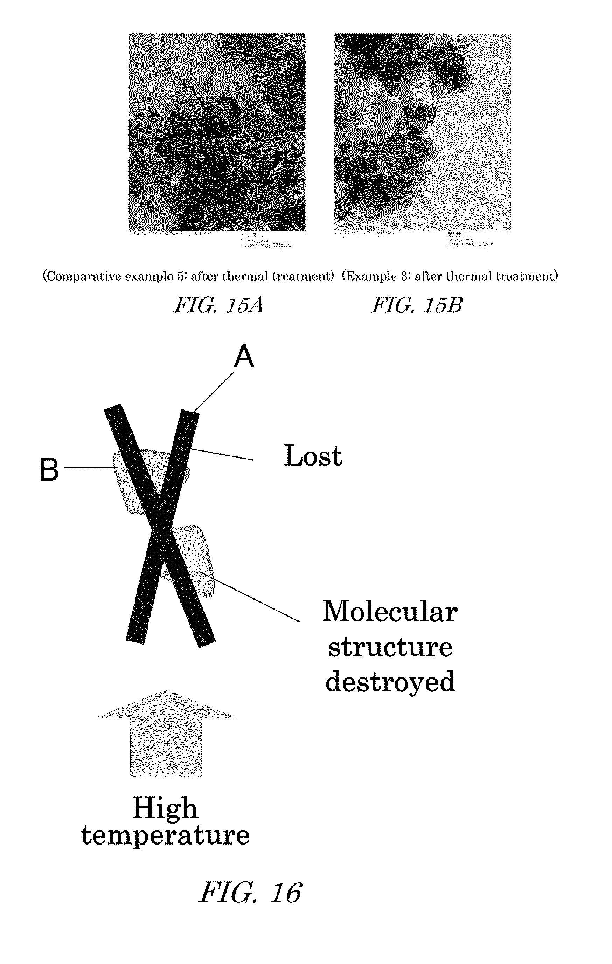

In the invention described in the above-mentioned Patent Documents, when a precursor of a metal compound adsorbed to a carbon material is produced into the metal compound, treatment by a high-temperature reaction such as burning is conducted. However, as shown in Fig. 16, with the treatment at a high temperature, a crystal of the metal compound to be obtained may become a dynamically unstable crystal depending on the type of the precursor of the meal compound. In addition, when the burning is carried out in an atmosphere containing oxygen at a high temperature, the carbon material may be lost and the desired conjugated compound may not be obtained.

The present invention is proposed for solving the above-described problems in the conventional technology, and an object of the present invention is to provide a manufacturing method for an electrode material having output performance improved by making a carbon material carry a metal compound which is likely to become a unstable crystal through a high-temperature reaction and by conjugating a composite material under an atmosphere containing oxygen, and to provide an electric storage device having the electrode material.

### SOLUTION TO PROBLEM

In order to achieve the above-described object, the present invention is a manufacturing method for an electrode material, in the method a metal compound and a carbon material being conjugated, and the method comprising the following steps.
(1) A precursor-carrying step in which a precursor of the metal compound is carried on a carbon material.
(2) A conjugating step in which the precursor carried on the carbon material and water are put into a closed container and heated in order to conjugate the precursor carried on the carbon material.

The conjugating step may further include carrying out the treatment under an atmosphere containing oxygen.

The precursor-carrying step may be a so-called UC treatment, in which shearing stress and centrifugal force are applied to a solution containing the carbon material and a material source for the metal compound in a revolving reaction container to cause mechanochemical reaction.

The metal compound is any one of TiO₂(B), a laminar xLiMO₂. (1-x)Li₂MnO₃ solid solution (wherein M represents one or more transition metals having an average valence number of +3 (e.g. Mn, Fe, Co, Ni, etc.), and 0<x<1) and LiCoO₂. Note that the "TiO₂(B)" means titanium dioxide having a bronze titanate-type crystal structure which can have a higher capacity than that of a spinel-type lithium titanate represented by Li₄+xTi₅O₁₂ (0≤x≤3), and can absorb and held at most one lithium per one chemical formula in gaps in skeletons formed from TiO₆ octahedron.

Also, an electrode material which is an electrode active material prepared by conjugating a starting material for a metal compound and a carbon material, and is obtained by heating a precursor of the metal compound carried on the carbon material together with water in a closed container, is an aspect of the present invention.

The metal compound may be any of TiO₂(B), the laminar xLiMO₂. (1-x)Li₂MnO₃ solid solution (wherein M represents one or more transition metals having an average valence number of +3, 0<x<1) or a LiCoO₂.

The metal compound may be a compound produced at a temperature that the carbon material is not lost under an atmosphere containing oxygen.

The metal compound may have two particle size distributions.

Also, an electric storage device having an electrode produced using the metal compound is an aspect of the present invention.

### ADVANTAGEOUS EFFECTS OF INVENTION

According to the present invention, when the metal compound is to be carried on the nanoparticulated carbon material, the carbon material can carry the metal compound even if a material having a low tolerance for the high-temperature reaction is used, resulting in a stable electrode material. In addition, since a metal compound with a size susceptible to heat can be crystalized, an electrode material with high input/output performances and an electric storage device comprising the electrode material can be achieved.

### BRIEF DESCRIPTION OF DRAWINGS

Figure 1 is a flowchart showing a manufacturing process of the composite of the metal compound and the carbon material according to an embodiment of the present invention.
Figure 2 is a configuration showing an apparatus for the precursor-carrying step.
Figure 3 is a schematic view showing an example of the composite of the metal compound and the carbon material according to an embodiment of the present invention.
Figure 4 is a schematic view showing an example of the composite of the metal compound and the carbon material according to an embodiment of the present invention.
Figure 5 is an SEM (×50 k) image showing that LiCoO₂ and the carbon material (mixture of CNF and KB) are carried.
Figure 6 is a flowchart showing a manufacturing process of the composite of the metal compound and the carbon material according to the first practical property.
Figure 7 is a TEM image of the crystal structure of the composite carrying the TiO₂(B) and the carbon material.
Figure 8 is a graph showing rate properties of Example 1 and Comparative Example 1.
Figure 9 is a flowchart showing a manufacturing process of the composite carrying LiCoO₂ and the carbon material (KB) according to the second practical property.
Figure 10 is an SEM image (×100 k) of the composite carrying LiCoO₂ and the carbon material (KB).
Figure 11 is a diagram showing rate properties of Example 2 and Comparative Examples 2 to 4.
Figure 12 is a flowchart showing a manufacturing process of the composite carrying 0.7Li₂MnO₃.0.3LiNi_{0.5}Mn_{0.5}O₂ (solid solution) and the carbon material (KB).
Figure 13 is a diagram showing rate properties of Example 3 and Comparative Example 5.
Figure 14 is a diagram showing the first discharge curves of Example 3 and Comparative Example 6.
Figures 15A and 15B are TEM images of the composites carrying 0.7Li₂MnO₃.0.3LiNi_{0.5}Mn_{0.5}O₂ (solid solution) and the carbon material (KB). Figure 15A is a picture for Comparative Example 6, and Figure 15B is a picture for Example 3.
Figure 16 is a schematic drawing showing a high-temperature reaction for the metal compound precursor and the carbon material according to the prior art.

### DETAILED DESCRIPTION

Hereinafter, embodiments for carrying out the present invention will be explained. Note that the present invention is not limited to the embodiments described below.

### (1) Electrode material

The electrode material according to the present invention is a composite in which a carbon material as a conductive assistant carries a metal compound, and both of them keep the form of nanoparticle over the manufacturing process. The nanoparticle represents a primary particle and may include a secondary particle which is an aggregate of the primary particle. In addition, the nanoparticle means a particle with a diameter of the aggregate of 1 to 300 nm or smaller in its form of circle, elliptical or polyangular block, or a particle with a minor axis (diameter) of 10 to 300 nm or smaller in its form of fiber.

This composite is obtained as a powder, and is kneaded with a binder and molded into an electrical energy-storing electrode. This electrode can be used for an electrochemical capacitor and a battery which use an electrolytic solution containing lithium. That is, the electrode made of the electrode material for the secondary battery and the capacitor can absorb, store and desorb lithium ion and acts as a positive electrode.

### (2) Carbon material

As the carbon material, one or plural kinds of a fiber carbon nanotube (CNT), a ketjen black which is a carbon black with a hollow shell structure, a carbon black such as an acetylene black, an amorphous carbon, a carbon fiber, a natural graphite, an artificial graphite, an active carbon and a mesoporous carbon can be mixed to use. The carbon nanotube may be any of a single-wall carbon nanotube (SWCNT) and a multi-wall carbon nanotube (MWCNT). When the carbon material has a fiber structure (for example, CNT, carbon nanofiber (CNF) or vapor-grown carbon fiber (VGCF)), a material treated with ultrahigh-pressure dispersion for dispersion and homogenization of the fiber structure may be used.

### (3) Metal compound

The metal compound according to the present invention is an oxide or oxoate containing lithium, represented by Li_{α}M_{β}Y_{γ}, and the following compounds (a) to (c) can be used.
(a) oxide-based metal compounds such as (M=Co, Ni, Mn, Ti, Si, Sn, Al, Zn, Mg; Y=O), LiCoO₂, Li₄Ti₅O₁₂, SnO₂ and SiO.
(b) oxoate-based metal compounds such as (M=Fe, Mn, V; Y=PO₄, SiO₄, BO₃, P₂O₇)
(c) metal compounds of nitrides such as (M=Ni, Co, Cu; Y=N) and Li_{2.6}Co_{0.4}N.

Furthermore, metals of Si, Sn, Ge, etc. which are M_{α}M'_{β}, and alloys such as (M=Sn, Sb, Si; M'=Fe, Co, Mn, V, Ti) Sn₃V₂ and Sb₃Co can be used.

Specific metal compounds may include the following metal compounds.
LiM₂O₄ type: LiMn₂O₄, LiNi_{0.5}Mn_{1.5}O₄
LiMO₂ type: LiCoO₂, LiNi_{1/3}CO_{1/3}Mn_{1/3}O₂, LiNi_{0.5}Mn_{0.5}O₂, LiNi_{0.8}Co_{0.15}Al_{0.05}O₂
Excess Li type (solid solution): xLi₂MnO₃. (1-x)LiNi_{0.5}Mn_{0.5}O₂, xLi₂MnO₃. (1-x) LiNi_{1/3}Co_{1/3}Mn_{1/3}O₂
LiMPO₄ type: LiFePO₄, LiMnPO₄, LiCoPO₄, Li₃V₂(PO₄)₃
LiMBO₃ type: LiFeBO₃, LiMnBO₃
Li₂MSiO₄ type: Li₂FeSiO₄, Li₂MnSiO₄
Li₂MP₂O₇ type: Li₂FeP₂O₇, Li₂MnP₂O₇
Ti type: Li₄Ti₅O₁₂, TiO₂(B), H₂Ti₁₂O₂₅
MxOy: MnO₂, Fe₂O₃

### (4) Manufacturing method

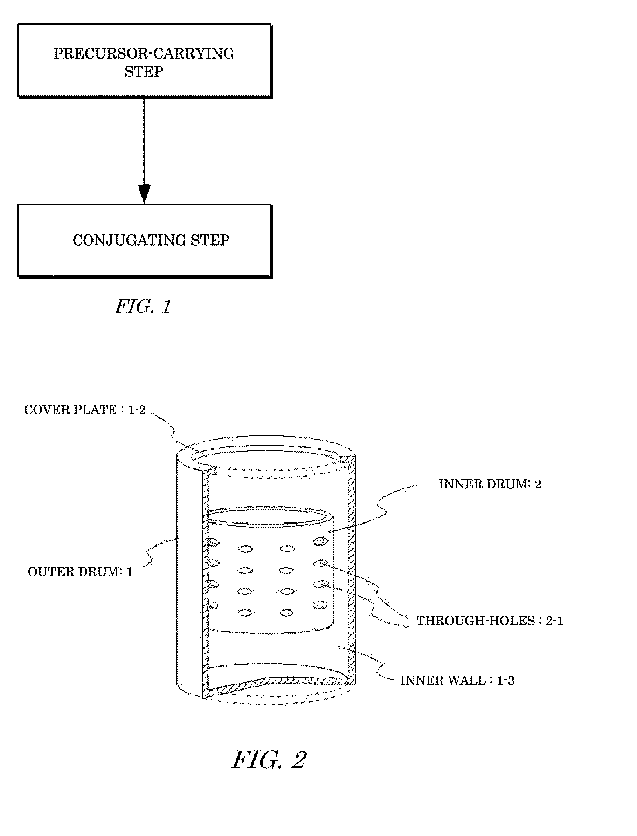

An example of the manufacturing process of the composite of the metal compound and the carbon material in an embodiment of the present invention is shown in Fig. 1. As shown in Fig. 1, initially, a precursor of the metal compound is carried on the carbon material while the carbon material is nanoparticulated. The precursor of the metal compound is M_{β}Y_{γ} before containing lithium (precursor-carrying step). Then, the precursor of the metal compound is reacted to produce a metal compound (conjugating step).

That is, for the composite of the metal compound and the carbon material according to the present invention, the precursor of the metal compound is carried on the carbon material while the carbon material is nanoized in the manufacturing process. Subsequently, the precursor of the metal compound is conjugated with the carbon material to produce the composite. In other words, the manufacturing process of the electrode material comprises the following steps.
(a) Precursor-carrying step in which a precursor of the metal compound is carried on a carbon material.
(b) Conjugating step in which the precursor carried on the carbon material is conjugated.

Hereinafter, (a) precursor-carrying step and (b) conjugating step will be explained in detail.

### (a) Precursor-carrying step

In the precursor-carrying step, a precursor of a metal compound is carried on the surface of a carbon material while the carbon material is nanoparticulated. The method for carrying the precursor of the metal compound on the carbon material includes: absorbing material sources for the precursor of the metal compound into the functional group of the carbon material while it is nanoparticulated; and carrying the precursor of the metal compound on the carbon material utilizing the material sources adsorbed to the carbon material as a starting point.

As a procedure to make the carbon material carry the precursor, initially, a mixed liquid in which the carbon material and the material sources for the precursor of the metal compound are blended in a solvent is prepared. As the solvent, alcohols such as IPA (isopropyl alcohol) or water are used.

When the reaction of the precursor of the metal compound is a hydrolysis reaction, the material sources may include a metal alkoxide M(OR)x. When the reaction of the precursor of the metal compound is a complexation reaction, the material sources may include an acetate, a sulfate, a nitrate and a halide of a metal, and a chelating agent. For example, when the metal compound is iron lithium phosphate, the material sources for the precursor of the metal compound are Fe sources such as iron (II) acetate, iron (II) nitrate, iron (II) chloride, iron (II) sulfate; phosphoric acid sources such as phosphoric acid, ammonium dihydrogen phosphate and diammonium hydrogenphosphate; and carboxylic acids such as citric acid, malic acid and malonic acid.

Main material sources to be adsorbed to the carbon material by a mechanochemical reaction are a titanium source as a material source which has positively-charged ions likely to bind with oxygen ions with unpaired electrons in a functional group, phosphorus as a phosphoric acid source, and the like.

Then, UC treatment imparts shearing stress and centrifugal force to the carbon material and the material sources for the precursor of the metal compound adsorbed thereto. For example, UC treatment can be carried out using the reaction container shown in Fig. 2.

As shown in Fig. 2, the reaction container is composed of an outer drum 1 having a cover plate 1-2 on an opening, and a revolving inner drum 2 having through holes 2-1. A reactant is put into the inner drum 2 of this reaction container, and the inner drum 2 revolves to move the reactant in the inner drum 2 to an inner wall 1-3 of the outer drum through the through holes 2-1 on the inner drum by centrifugal force. At this time, the reactant collides against the inner wall 1-3 of the outer drum by centrifugal force of the inner drum 2, and is shaped into a thin film and slides up to the upper part of the inner wall 1-3. In this state, both shearing stress with the inner wall 1-3 and centrifugal force from the inner drum are simultaneously applied to the reactant, and thus great mechanical energy is applied to the thin-film reactant. This mechanical energy is considered to be converted into a chemical energy required for the reaction, i.e. a so-called activation energy, but its reaction progresses in a short period.

Since the thin-film shape increases the mechanical energy applied to the reactant in this reaction, a thickness of the thin film is 5 mm or less, preferably 2.5 mm or less, more preferably 1.0 mm or less. Note that the thickness of the thin film can be set according to the width of the cover plate and the amount of the reactant. For example, the centrifugal force required for producing this thin film is 1,500 N (kgms⁻²) or higher, preferably 60,000 N (kgms⁻²) or higher, more preferably 270,000 N (kgms⁻²) or higher.

Subsequently, by conducting the second UC treatment, the material sources for the precursor of the metal compound adsorbed to the carbon material and other material sources are subjected to the mechanochemical reaction to produce the precursor of the metal compound on the carbon material. In short, the second UC treatment is carried out. When the production reaction for the precursor of the metal compound is hydrolysis reaction, H₂O (distilled water) for hydrolysis and dehydration polymerization is previously added. When the production reaction for the precursor of the metal compound is a complexation reaction, pH is previously adjusted for complexation. In pH adjustment, for example an alkali such as ammonia is put into the reaction container. In other words, the dispersion/adsorption steps and the precursor-producing step can be separated by H₂O (distilled water) and pH adjustment.

When the material sources for the precursor of the metal compound are metal alkoxides, mainly hydrolysis and dehydration condensation reactions are caused on the carbon material by this mechanochemical reaction, so that the precursor of the metal compound is produced on the carbon material. When the material sources for the precursor of the metal compound are metal salts and carboxylic acids, the material sources and other material sources which are adsorbed to the carbon material are complexed. For example, when the adsorbed material sources for the precursor of the metal compound are phosphoric acids, this phosphoric acid is complexed with the Fe source and citric acid to form a ternary complex.

Note that the lithium source may be blended before burning, because the lithium source is not considered to be involved in the main reactions in this precursor-producing step. However, it is more preferable that the lithium source is simultaneously blended in this precursor-producing step, because the lithium source can be simultaneously blended by the second UC treatment.

Note that the carbon material in which the precursor of the metal compound capable of absorbing, holding and emitting lithium is dispersed and carried can be produced also by one-step UC treatment. In this case, the carbon material, the metal alkoxide, a reaction inhibitor and water are put into the inner drum of the reaction container, and then the inner drum is revolved in order to mix and disperse them as well as to progress hydrolysis and condensation reactions to enhance the chemical reaction. At the same time as completion of the reaction, the carbon material in which the precursor of the metal compound capable of absorbing, holding and emitting lithium is dispersed and carried can be obtained.

### (b) Conjugating step

In the conjugating step, the precursor of the metal compound carried on the carbon material is synthesized and crystallized. As the method of synthesizing and crystallizing the precursor of the metal compound, a hydrothermal synthesis method for synthesizing a compound and growing its crystal can be used, which is performed in the presence of high-pressure water vapor.

In this hydrothermal synthesis, raw materials and a solvent such as water are put into an autoclave, and heated under pressure in saturated vapor. Under an ordinary temperature and pressure, pressurization and heating can allow dissolution of a sparingly water-soluble substance, increase of a reaction rate, and growth promotion of the crystal. A heating temperature is usually 110 to 300°C depending on the kind of the metal salt as a raw material. Also, pressurization can be simultaneously carried out by heating in a closed container. Although the internal pressure of the autoclave typically depends on the temperature, the autoclave may be aggressively pressurized and the pressure is preferably about 1.1 to 84.8 atm. It is to be noted that, in addition to water, e.g. organic solvents such as alcohols (ethanol, methanol, isopropyl alcohol, etc.) or a mixed solution of these organic solvents and water can be used as a solvent in the autoclave in this hydrothermal synthesis.

In the hydrothermal synthesis, the precursor of the metal compound can be usually synthesized and crystallized at a temperature of 300°C or lower that the carbon material is oxidized and lost, and therefore this synthesis can also be carried out under an atmosphere containing oxygen. This synthesis is effective particularly for metallic oxide requiring oxygen in the conjugating step. In addition, since the precursor of the metal compound can be usually synthesized and crystalized at a relatively low temperature of 300°C or lower, it is considered that the crystal can be maintained even in a case of a nanoparticle with a small diameter.

### (5) Characteristics of product

The electrode material for the secondary battery produced by this manufacturing method has the following characteristics. That is, the carbon material is not lost at a heating temperature for hydrothermal synthesis, 110 to 300°C, and the metal compound is carried on the surface of this carbon material. This metal compound is a metal compound which can be synthesized at 110 to 300°C and about 1.1 to 84.8 atm. In addition, since its crystal hardly becomes unstable by heating, the particle has a small diameter of 1 to 300 nm.

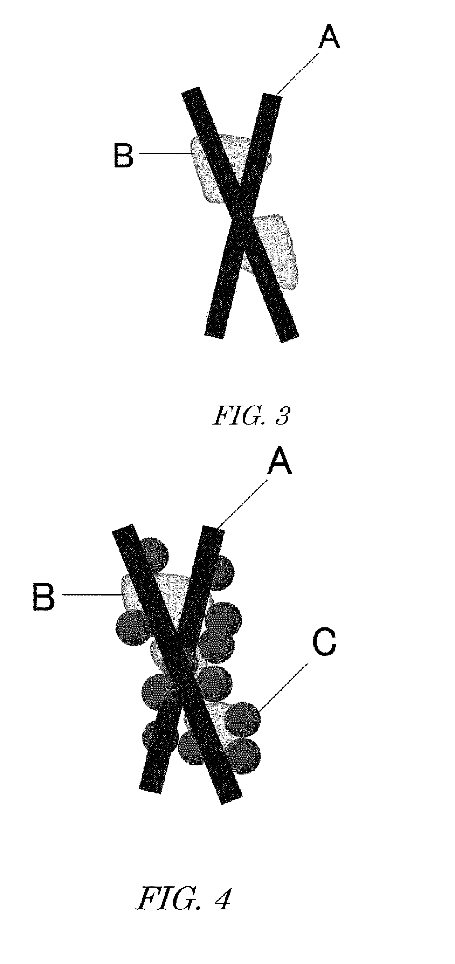

That is, as shown in Fig. 3, even in a case that the metal compound is carried on the carbon material with short fiber diameter of 10 to 300 nm, a carbon material A is not lost by oxidization. In addition, even if a metal compound B is a thermodynamically unstable substance, the compound can be synthesized and crystallized. In addition, as shown in Fig. 4, when synthesized and crystallized by a conventional high-temperature reaction, even a metal compound C with a size that the compound became a unstable crystal due to influence of heat and could not synthesized can be synthesized and crystallized.

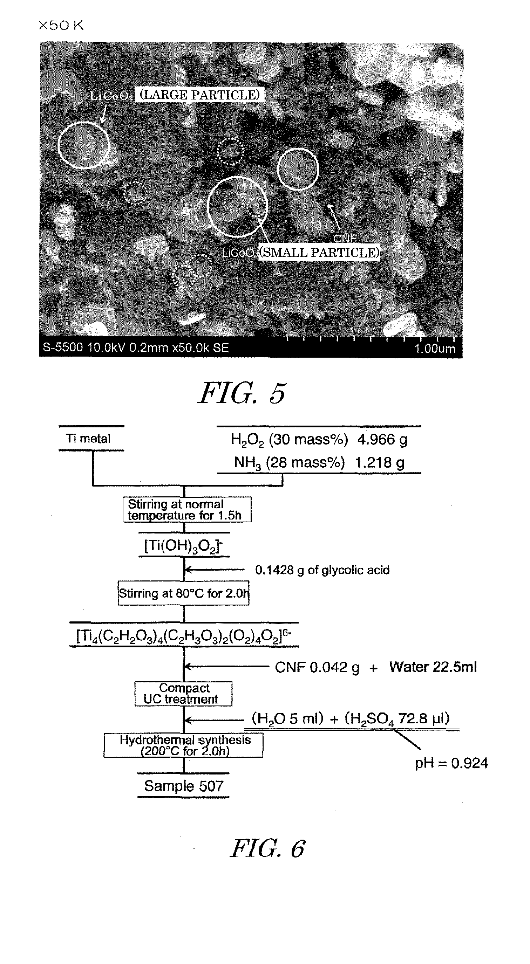

Fig. 5 is an SEM image of a composite in which the carbon material of CNF and KB (each of 10 wt%) carries LiCoO₂ (80 wt%) as the metal compound. As shown in Fig. 5, LiCoO₂ with a diameter of the primary particle of the metal compound being 100 to 300 nm (large particle) and LiCoO₂ with a particle diameter of 5 to 80 nm (small particle) are carried on CNF and KB as carbon materials. Note that the small particle may be carried on the surface of the large particle. Thus, as the primary particles of the metal compound, the metal compounds with different particle size distributions are carried on the carbon material, thereby the density of the carbon material as an electrode layer can be increased to achieve a higher capacity. Note that, the particle diameter of the primary particle is a value obtained by observing the composites by SEM, randomly selecting a large particle and a small particle from them, and measuring their particle diameters. When the primary particle was fibrous, its short diameter was used as a particle diameter. In the following Examples, particle diameters of nanoparticles were calculated by this method.

### (6) Action

The phenomenon contributing to the present invention caused by this manufacturing method is considered as below. In the present invention, initially, a metal precursor is conjugated at a relatively low temperature of 110 to 300°C in the conjugating step. Thereby, even a precursor of a metal compound made from a thermodynamically unstable material can be crystalized. Similarly, it is considered that a crystal with a small diameter which is more susceptible to heat than a crystal with a large diameter can also be crystalized at a low temperature.

That is, since high-temperature reaction has been conventionally used for conjugation, some kinds of the metal compounds could not be crystalized, and other kinds became unstable crystals. In addition, even in a case of a metal compound tolerant to high-temperature reaction, a crystal with a small particle diameter susceptible to heat could not be synthesized.

However, in the conjugating step in the present invention, the influence by heat is small because of the low-temperature synthesis. Thus, it is considered that the crystal with the small diameter is maintained also in the conjugating step.

Consequently, in the composite produced by this manufacturing method, the nanoparticle of the metal compound is maintained. Thereby, the electric storage device such as a battery and an electrochemical capacitor using the composite as an electrode material for the lithium secondary battery, its higher input/output performances and higher capacity will be achieved.

### (7) Lithium ion secondary battery

The electrode material of the present invention is suitable for a positive electrode of a lithium ion secondary battery. Hence, the present invention also provides a lithium ion secondary battery which comprises: a positive electrode having an active material layer including the electrode material of the present invention; a negative electrode; and a separator holding a non-aqueous electrolytic solution placed between the negative electrode and the positive electrode.

The active material layer for the positive electrode can be produced by dispersing the electrode material of the present invention in a solvent in which a binder is dissolved as required, applying the obtained dispersion on a current collector by a doctor blade method or the like and drying it. Additionally, the obtained dispersion may be molded into a prescribed shape, and press-bonded to the current collector.

As the current collector, conductive materials such as platinum, gold, nickel, aluminum, titanium, copper and carbon can be used. The current collector can take any shape such as film, foil, plate, mesh, expanded metal and cylinder-like shapes.

As the binder, a known binder such as polytetrafluoroethylene, polyvinylidene fluoride, tetrafluoroethylene-hexafluoropropylene copolymer, polyvinyl fluoride, carboxymethylcellulose can be used. A content of the binder is preferably 1 to 30 mass% with respect to the total amount of the mixed material. When it is 1 mass% or less, the strength of the active material layer is insufficient, and when it is 30 mass% or more, inconveniences such as decreased discharge capacity of the negative electrode and excessive internal resistance are caused.

In addition to a graphite electrode used for general lithium secondary batteries, negative electrodes including active material layers containing known negative-electrode active materials can be used as the negative electrode without particular limitation. Examples of the negative-electrode active materials may include oxides such as Fe₂O₃, MnO, MnO₂, Mn₂O₃, Mn₃O₄, CoO, Co₃O₄, NiO, Ni₂O₃, TiO, TiO₂, SnO, SnO₂, SiO₂, RuO₂, WO, WO₂ and ZnO, metals such as Sn, Si, Al and Zn, composite oxides such as LiVO₂, Li₃VC₄ and Li₄Ti₅O₁₂, and nitrides such as Li_{2.6}Co_{0.4}N, Ge₃N₄, Zn₃N₂ and Cu₃N.

The active material layer for the negative electrode can be produced by dispersing the negative-electrode active materials and a conductive agent in a solvent in which a binder is dissolved as required, applying the obtained dispersion on a current collector by a doctor blade method or the like and drying it. Additionally, the obtained dispersion may be molded into a prescribed shape, and press-bonded to the current collector.

The description on the current collector and the binder for the positive electrode also applies to those for the negative electrode. As the conductive agent, carbon powders such as carbon black, natural graphite and artificial graphite can be used.

As the separator, for example a polyolefin fiber non-woven fabric, a glass fiber non-woven fabric, and the like are preferably used. For the electrolytic solution held by the separator, an electrolytic solution prepared by dissolving an electrolyte in a non-aqueous solvent is used, and a known non-aqueous electrolytic solution can be used without particular limitation.

As the solvent for the non-aqueous electrolytic solution, electrochemically stable ethylene carbonate, propylene carbonate, butylene carbonate, dimethyl carbonate, ethylmethyl carbonate, diethyl carbonate, sulfolane, 3-methyl sulfolane, γ-butyrolactone, acetonitrile and dimethoxyethane, N-methyl-2-pyrrolidone, dimethylformamide, or their mixtures can be preferably used.

As a solute for the non-aqueous electrolytic solution, a salt which generates lithium ions when dissolved in an organic electrolytic solution can be used without particular limitation. For example, LiPF₆, LiBF₄, LiClO₄, LiN (CF₃SO₂)₂, LiCF₃SO₃, LiC (SO₂CF₃)₃, LiN (SO₂C₂F₅)₂, LiAsF₆ and LiSbF₆, or their mixtures can be preferably used. In addition to the salt which generates lithium ions, a quaternary ammonium salt or a quaternary phosphonium salt having quaternary ammonium cations or quaternary phosphonium cations can be used as the solute for the non-aqueous electrolytic solution. For example, salts composed of cations represented by R¹R²R³R⁴N⁺ or R¹R²R³R⁴P⁺ (wherein R¹, R², R³ and R⁴ represent alkyl groups having 1 to 6 carbon atoms), and anions comprising PF₆⁻, BF₄⁻, ClO₄⁻, N(CF₃SO₃)₂⁻, CF₃SO₃⁻, C(SO₂CF₃)₃⁻, N(SO₂C₂F₅)₂⁻, AsF₆⁻ or SbF₆⁻, or their mixtures can be preferably used.

Although the application of the electrode material of the present invention was exemplified by the above-mentioned lithium ion secondary battery, the application is not limited to the battery, and the material can also be used for a lithium ion capacitor. In this case, the electrode material of the present invention is used for the negative electrode, and a substance which can reversibly carry lithium ions, e.g. an activated carbon is used for the positive electrode. For the electrolytic solution, LiClO₄, LiAsF6, LiBF₄, LiPF₆, LiN (C₂F₅SO₂)₂, LiN(CF₃SO₂)₂, LiN(FSO₂)₂ or the like as an electrolyte which can generate lithium ions in a solvent such as ethylene carbonate and propylene carbonate can be used to constitute the lithium ion capacitor.

### EXAMPLES

### [First characteristics comparison (TiO₂(B)/CNF)]

Characteristics of the electrode material for the secondary battery obtained by the manufacturing method of the present invention will be confirmed. In Examples and Comparative Examples, a composite as the electrode material was produced according to the following conditions, and a battery using the composite as the electrode material for the secondary battery was produced to measure rate characteristics.

### (Example 1)

As shown in Fig. 6, initially, Ti metal, 4.966 g (30 mass%) of H₂O₂, and 1.218 g (28 mass%) of NH₃ were stirred at normal temperature for 1.5 hours to produce [Ti(OH)₃O₂]⁻, to which 0.1428 g of glycolic acid was added, and stirred at 80°C for 2.0 hours to produce [Ti₄ (C₂H₂O₃)₄ (C₂H₃O₃)₂(O₂)₄O₂]⁶⁻.

Subsequently, 0.042 g of CNF and 22.5 ml of water ware mixed and subjected to UC treatment at a rotational speed of 50 m/s for 5 minutes. In this UC treatment, a centrifugal force of 66,000 N (kgms⁻²) was applied. This UC treatment corresponds to the precursor-carrying step in which the precursor of the metal compound is carried on the carbon material by the single-step UC treatment.

Next, a solution at pH 0.924 was prepared with 5 ml of H₂O and 72.8 µl of H₂SO₄, this solution was added to [Ti₄(C₂H₂O₃)₄(C₂H₃O₃)₂(O₂)₄O₂]⁶⁻ after UC treatment and subjected to hydrothermal synthesis in saturated vapor at 200°C for 2 hours to obtain a composite of TiO₂(B) and the carbon material. At this time, the pressure was 15.3 atm. This hydrothermal synthesis corresponds to the conjugating step.

Subsequently, the composite of the obtained TiO₂(B) and the carbon material was powdered, and this composite powder, together with polyvinylidene fluoride (PVDF) as a binder (TiO₂(B)/CNF/PVDF 80:20:5), were put into an SUS mesh welded onto an SUS plate to prepare a working electrode W. E. A separator and a Li foil as a counter electrode C. E. and a reference electrode were set on the electrode, 1 M of LiPF₆ ethylene carbonate/diethyl carbonate 1:1 solution as an electrolytic solution was impregnated to prepare a battery cell. The obtained battery cell was evaluated for discharge and charge characteristics under a condition of a wide range of current density.

### (Comparative Example 1)

In Comparative Example 1, UC treatment was omitted, an Na₂Ti₃O₇ polycrystal as a starting material was obtained by high-temperature burning at 800°C, and a ground product prepared by crushing this polycrystal was soaked in 0.5 N of hydrochloric acid solution to carry out proton exchange, then washed with water and dried in vacuum at 120°C to obtain a proton-exchanged H₂Ti₃O₇ polycrystal as a precursor. This obtained precursor H₂Ti₃O₇ polycrystal was treated in air at 320°C for 20 hours to obtain a TiO₂(B) powder. This powder, together with PVDF as a binder and a CNF as a carbon material (TiO₂(B)/CNF/PVDF 56:24:20), were put into an SUS mesh welded onto an SUS plate, and dried to prepare a working electrode W. E. A separator and a Li foil as a counter electrode C. E. and a reference electrode were set on the electrode, to which 1 M of LiPF₆ ethylene carbonate/diethyl carbonate 1:1 solution as an electrolytic solution was impregnated to prepare a battery cell. The obtained battery cell was evaluated for discharge and charge characteristics under a condition of a wide range of current density.

### (Results)

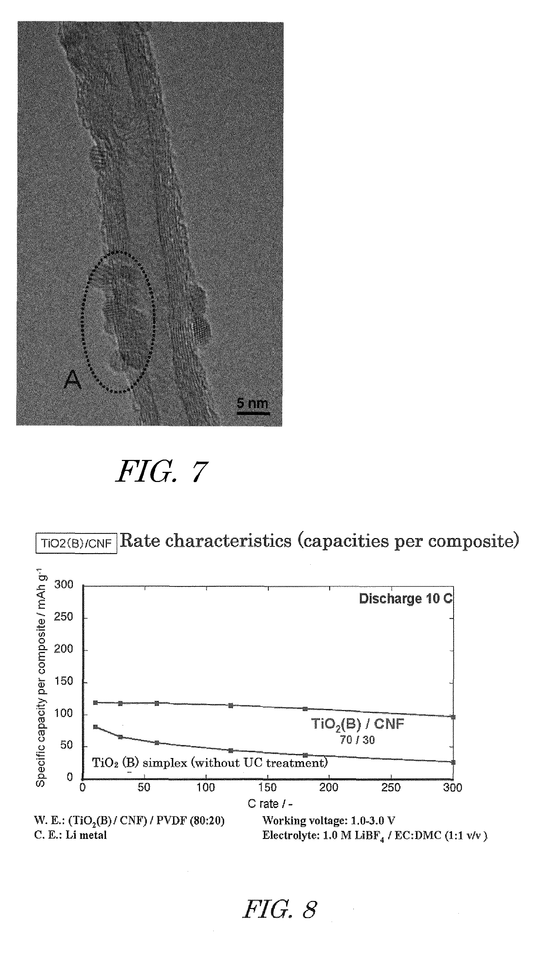

In relation to the composite obtained by the manufacturing method in Example 1, "A" of Fig. 7 shows that a primary particle of the TiO₂(B) is carried on the surface of the CNF. A particle diameter of this particle was 1 to 30 nm. That is, even such a fine nano-sized particle supposed to be susceptible to heat can be crystalized and carried on the CNF.

In addition, Fig. 8 is a diagram showing relationships between the rates and the discharge capacities regarding the batteries using the composites in Example 1 and Comparative Example 1. The battery using the composite in Comparative Example 1 showed a remarkably-small capacity compared to that of the battery using the composite in Example 1. In contrast, the battery using the composite in Example 1 had an excellent rate characteristic and the capacity was greater than 100 mAhg⁻¹ even when the rate was 300 C.

This result shows that when the metal compound TiO₂(B) is carried on the CNF as the carbon material in Example 1, the carbon material is not lost even by the conjugating step under an atmosphere containing oxygen in hydrothermal synthesis, and furthermore a large capacity and high input/output performances can be achieved by maintaining the nanoparticulated form of the carried metal compound.

### [Second characteristics comparison (LiCoO₂/KB)]

Characteristics of the electrode material for the secondary battery obtained by the manufacturing method of the present invention will be confirmed. In Examples and Comparative Examples, a composite as the electrode material was produced according to the following conditions, and a battery using the composite as the electrode material for the secondary battery was produced to measure rate characteristics.

### (Example 2)

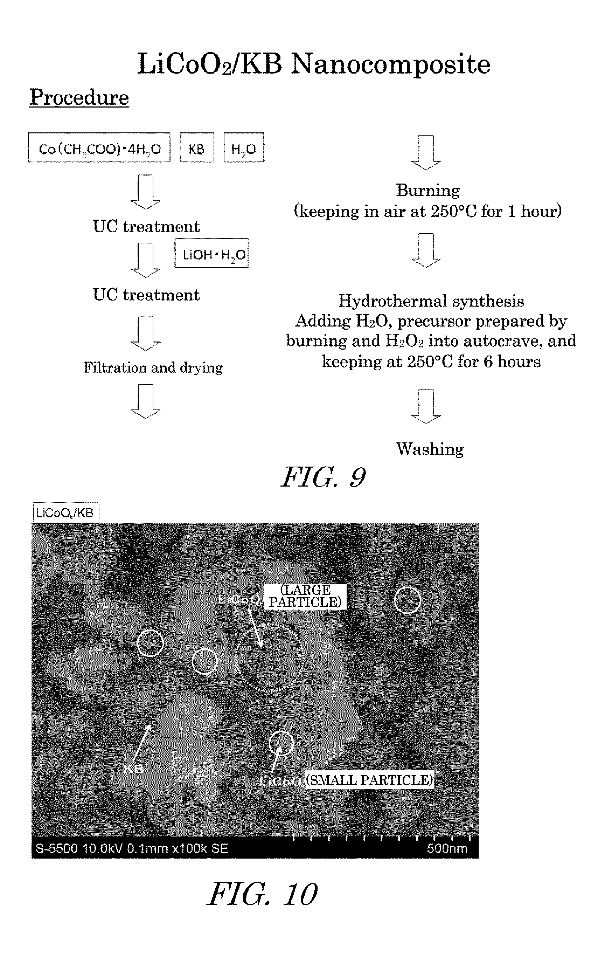

As shown in Fig. 9, initially, ketjen black, Co(CH₃COO).4H₂O) and distilled water ware mixed, and the mixed liquid was subjected to UC treatment at a rotational speed of 50 m/s for 5 minutes. To the mixed liquid after UC treatment, LiHO.H₂O was added, and subjected to UC treatment at a rotational speed of 50 m/s for 5 minutes. In this UC treatment, a centrifugal force of 66,000 N (kgms⁻²) was applied. These first and second UC treatments correspond to the precursor-carrying step in which the precursor of the metal compound is carried on the carbon material by UC treatment.

Additionally, the obtained solution was rapidly heated to 250°C in an oxidative atmosphere e.g. in air, and burned by keeping this temperature for 1 hour. After burning, H₂O, a precursor prepared by burning and H₂O₂ were added into an autoclave, subjected to hydrothermal synthesis while kept in saturated vapor at 250°C for 6 hours to obtain a composite of LiCoO₂ and the carbon material. At this time, the pressure was 39.2 atm. This hydrothermal synthesis corresponds to the conjugating step.

Subsequently, the composite of the obtained LiCoO₂ and ketjen black (KB) was powdered, and this composite powder, together with polyvinylidene fluoride (PVDF) as a binder (LiCoO₂/KB/PVDF 80:20:5), were put into an SUS mesh welded onto an SUS plate and dried to prepare a working electrode W. E. A separator and a Li foil as a counter electrode C. E. and a reference electrode were set on the electrode, to which 1 M of LiPF₆ ethylene carbonate/diethyl carbonate 1:1 solution as an electrolytic solution was impregnated to prepare a battery cell. The obtained battery cell was evaluated for discharge and charge characteristics under a condition of a wide range of current density.

### (Comparative Examples 2 to 4)

In Comparative Example 2, UC treatment was omitted, both powders of Li₂CO₂ and Co₃O₄ were mixed in a dry manner, and the obtained mixture was burned at a high temperature (700°C for 12 hours) to obtain a LiCoO₂ powder.

In Comparative Example 3, UC treatment was carried out in the same way as Example 2 to obtain a LiCoO₂ precursor carried on KB, and the precursor was burned at a high temperature (700°C for 12 hours) without using hydrothermal synthesis in this conjugating step, to obtain a LiCoO₂ powder. Since burning was conducted at the high temperature (700°C) in Comparative Example 3, a large amount of KB was burned up.

In Comparative Example 4, UC treatment was omitted, both powders of Li₂CO₂ and Co₃O₄ were mixed in a dry manner, and the obtained mixture was put into an autoclave together with H₂O, and kept in saturated vapor at 250°C for 6 hours to obtain a LiCoO₂ powder.

These LiCoO₂ powders, together with PVDF as a binder and KB as a carbon material (LiCoO₂/KB/PVDF 70:20:10), were put into an SUS mesh welded onto an SUS plate, and dried to prepare a working electrode W. E. A separator and a Li foil as a counter electrode C. E. and a reference electrode were set on the electrode, to which 1 M of LiPF₆ ethylene carbonate/diethyl carbonate 1:1 solution as an electrolytic solution was impregnated to prepare battery cells. The obtained battery cells were evaluated for discharge and charge characteristics under a condition of a wide range of current density.

### (Results)

In relation to the composite obtained by the manufacturing method in Example 2, Fig. 10 shows that the LiCoO₂ particles having relatively-large particle diameters (particle diameter: 100 to 300 nm) and the LiCoO₂ particles having relatively-small particle diameters (particle diameter: 5 to 80 nm) are carried on a surface of KB. Note that some of the LiCoO₂ particles of the relatively-small particle diameters are carried on the surfaces of the LiCoO₂ particles of the larger particle diameters.

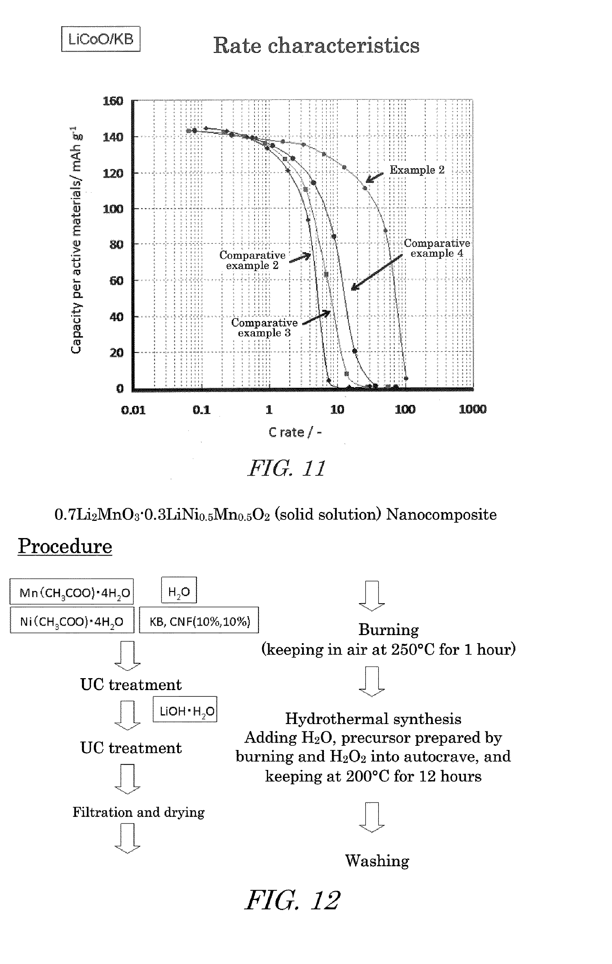

Figure 11 is a diagram showing relationships between the rates and the discharge capacities regarding battery cells using the composites in Example 2 and Comparative Examples 2 to 4. The battery cells using the composites in Comparative Examples 2 to 4 showed remarkably-small capacities compared to that of the battery cells using the composite in Example 2. In contrast, the battery cell using the composite in Example 2 had an excellent rate characteristic and the capacity was greater than 100 mAhg⁻¹ even when the rate was 50 C.

This result shows that when the metal compound LiCoO₂ is carried on KB as the carbon material in Example 2, the carbon material is not lost even by the conjugating step under the atmosphere containing oxygen in hydrothermal synthesis, and furthermore a large capacity and high input/output performances can be achieved by maintaining the nanoparticulated form of the carried metal compound.

### [Third characteristics comparison

### (0.7Li₂MnO₃.0.3LiNi_{0.5}Mn_{0.5}O₂/KB.CNF)]

Characteristics of the composite of 0.7Li₂MnO₃.0.3LiNi_{0.5}Mn_{0.5}O₂/KB.CNF as the electrode material for the secondary battery obtained by the manufacturing method of the present invention will be confirmed. In Examples and Comparative Examples, a composite as the electrode material was produced according to the following conditions, and a battery using the composite as the electrode material for the secondary battery was produced to measure rate characteristics.

### (Example 3)

In Example 3, a solution in which 1.54 g of Mn(CH₃COO)₂.4H₂O, 0.274 g of Ni(CH₃COO)₂ and 0.21 g of a carbon mixture prepared by mixing ketjen black (particle diameter: about 40 nm):carbon nanofiber (diameter: about 50 nm, length: a few hundred meters) = 1:1 by mass, were added to 75 mL of water was introduced into the inner drum of the reaction container shown in Fig. 2, the inner drum was revolved for 300 seconds so that a centrifugal force of 70,000 kgms⁻² was applied to the reaction liquid, Mn(CH₃COO)₂.4H₂O and Ni(CH₃COO)₂ were dissolved, and the carbon mixture was dispersed. The revolution of the inner drum was temporarily stopped, and a liquid prepared by dissolving 0.6 g of LiOH.H₂O in water was added to the inner drum. The liquid was at pH 10. Subsequently, the inner drum was revolved again for 300 seconds so that a centrifugal force of 70,000 kgms⁻² was applied to the reaction liquid. In this period, nuclei of a Mn oxide and a Ni oxide were formed between the inner wall of the outer drum and the outer wall of the inner drum, and the nuclei grew and were carried on the surface of the carbon mixture. After stop of the revolution of the inner drum, the carbon mixture was collected by filtration and dried in air at 100°C for 12 hours. The filtrate was confirmed by ICP spectroanalysis, indicating that 95% or more of Mn and Ni in the Mn(CH₃COO)₂.4H₂O material and the Ni(CH₃COO)₂ material were carried. Subsequently, a LiOH.H₂O aqueous solution which was adjusted so that Mn:Li was 1:2 was blended into the dried powder, kneaded, dried, then rapidly heated to 250°C under an atmosphere containing oxygen e.g. in air, and burned by keeping this temperature for 1 hour. After burning, H₂O, a precursor prepared by burning and H₂O₂ were added into an autoclave, and kept in saturated vapor at 200°C for 12 hours to obtain a composite powder. At this time, the pressure was 16 atm. This step corresponds to the conjugating step.

### (Comparative Example 5)

In Comparative Example 5, UC treatment was omitted, and a 0.7Li₂MnO₃.0.3LiNi_{0.5}Mn_{0.5}O₂ powder was obtained by a solid-phase method without hydrothermal synthesis. Specifically, Mn(CH₃CO₂)₂.4H₂O, Ni(NO₃)₂.6H₂O and CH₃CO₂Li.2H₂O were blended into distilled water, and stilled on a hot plate (100°C). This solution was dried to obtain a gelatinous substance. Then, this gelatinous substance was burned at 400°C and 500°C sequentially, and furthermore burned 900°C for 10 hours. A resulting burned product was crushed to obtain a powder of the metal compound.

The composite in Example 3, together with PVDF as a binder (LiCoO₂/KB/PVDF 70:20:10), were put into an SUS mesh welded onto an SUS plate, and dried to prepare a working electrode W. E. A separator and a Li foil as a counter electrode C. E. and a reference electrode were set on the electrode, to which 1 M of LiPF₆ ethylene carbonate/diethyl carbonate 1:1 solution as an electrolytic solution was impregnated to prepare battery cells.

In addition, the powder in Comparative Example 5, together with 0.4 g of PVDF as a binder and 0.6 g of carbon black, were put into an SUS mesh welded onto an SUS plate, and dried to prepare a working electrode W. E. A separator and a Li foil as a counter electrode C. E. and a reference electrode were set on the electrode, to which 1 M of LiPF₆ ethylene carbonate/diethyl carbonate 1:1 solution as an electrolytic solution was impregnated to prepare battery cells.

These obtained battery cells were evaluated for discharge and charge characteristics under a condition of a wide range of current density.

### (Results)

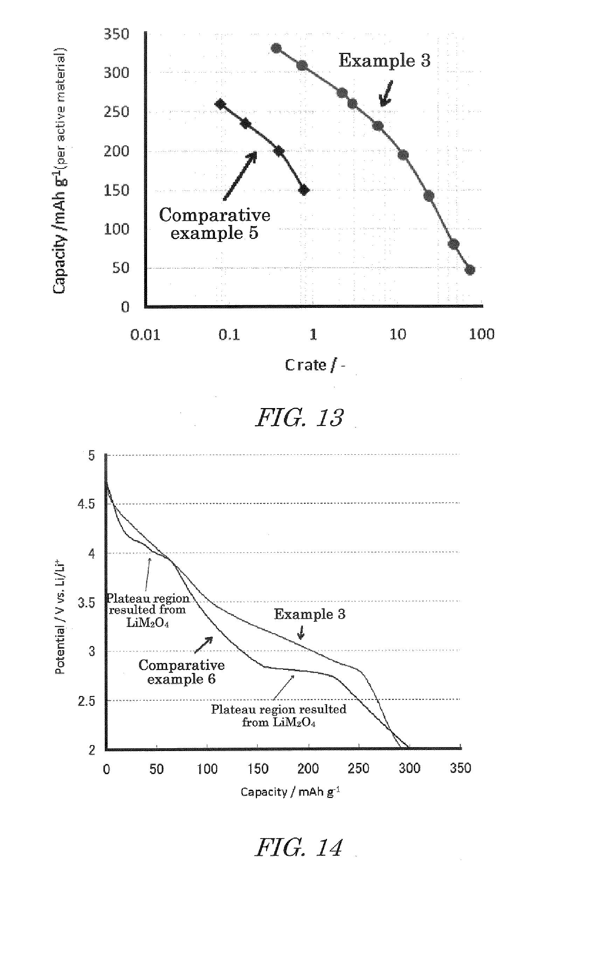

Fig. 13 is a diagram showing relationships between the rates and the discharge capacities regarding the battery cells using the composites in Example 3 and Comparative Example 5. The battery cell using the composite in Comparative Example 5 showed a remarkably-small capacity compared to that of the battery cell using the composite in Example 3, and showed a considerably decreased capacity with the increase of the rate. In contrast, the battery cell using the composite in Example 3 had an excellent rate characteristic and the capacity was greater than 50 mAhg⁻¹ even when the rate was 100 C.

This result shows that when the metal compound (0.7Li₂MnO₃.0.3LiNi_{0.5}Mn_{0.5}O₂ solid solution) is carried on the carbon material in Example 3 (KB and CNF), the carbon material is not lost even by the conjugating step under an atmosphere containing oxygen in hydrothermal synthesis, and furthermore a large capacity and high input/output performances can be achieved by maintaining the nanoparticulated form of the carried metal compound.

### (Comparative Example 6)

In Comparative Example 6, a solution in which 1.54 g of Mn(CH₃COO)₂.4H₂O, 0.274 g of Ni(CH₃COO)₂, 0.78 g of CH₃COOLi (Mn:Li = 1:2) and 0.21 g of carbon mixture prepared by mixing ketjen black (particle diameter: about 40 nm):carbon nanofiber (diameter: about 50 nm, length: a few hundred meters) = 1:1 by mass were added to 75 mL of water was introduced into the inner drum of the reaction container like Example 3, the inner drum was revolved for 300 seconds so that a centrifugal force of 70,000 kgms⁻² was applied to the reaction liquid. After stop of the revolved of the inner drum, a liquid portion was collected, and confirmed by ICP spectroanalysis, indicating that only about 30% of Mn and Ni in the Mn(CH₃COO)₂.4H₂O material and the Ni(CH₃COO)₂ material were carried on the carbon mixture. For this reason, all contents in the reaction container were collected, evaporated for inspissation in air at 100°C, and then heated in air at 300°C for 1 hour to obtain a composite powder.

The composite powder, together with PVDF as a binder (LiCoO₂/KB/PVDF 70:20:10), were put into an SUS mesh welded onto an SUS plate, and dried to prepare a working electrode W. E. A separator and a Li foil as a counter electrode C. E. and a reference electrode were set on the electrode, to which 1 M of LiPF₆ ethylene carbonate/diethyl carbonate 1:1 solution as an electrolytic solution was impregnated to prepare battery cells.

Fig. 14 is a diagram showing the first discharge curves for the battery cells using the composites of Example 3 and Comparative Example 6. In the battery cell using the composite of Comparative Example 6, plateau voltages from LiMn₂O₄ based on the discharges at around 4 V and 2.7 V are observed, and on the other hand, in the battery cell using the composite of Example 3, the potential is gently decreased with increase of the capacity, there is not the plateau region as in Comparative Example 6, and preferable discharge characteristics can be obtained.

Figs 15A and 15B are TEM images showing the states of the surfaces on the composites of Example 3 and Comparative Example 6. Fig. 15A shows a composite of Comparative Example 6, and Fig. 15B shows a composite of Example 3. It is indicated that the composite of Example 3 includes uniform crystals with particle diameters of about 10 to 30 nm. Whereas, the composite of Comparative Example 6 includes crystals with particle diameters of 5 nm or smaller as well as large crystals with lengths of about 100 nm, and the sizes of the crystals are uneven. This may reflect that, in Example 3, the hydroxide fine particle is carried on the carbon mixture with good dispersiveness, but in Comparative Example 6, only a material having the carbon mixture covered by aggregates with uneven sizes and amorphous compounds is obtained, in the carrying step. In other words, it is considered that, in Example 3, the nanoparticle of the composite oxide which has a uniform size by progression of even reaction is formed with good dispersiveness in heating treatment and hydrothermal treatment, but in Comparative Example 6, a composite oxide which has uneven sizes by progression of uneven reaction is formed in heating treatment.

### DESCRIPTION OF SYMBOLS

- 1:: Outer drum
- 1-2:: Cover plate
- 1-3:: Inner wall
- 2:: Inner drum
- 2-1:: Through-holes

## Claims

1. A manufacturing method for an electrode material, being a method of manufacturing an electrode active substance in which a starting material for a metal compound and a carbon material are conjugated, and comprising:
a precursor-carrying step in which a precursor of the metal compound is carried on the carbon material; and
a conjugating step in which the precursor of the metal compound carried on the carbon material is conjugated,
wherein the precursor of the metal compound carried on the carbon material and water are put into a closed container and heated in the conjugating step.

2. The manufacturing method for the electrode material according to claim 1, wherein
the conjugating step is carried out under an atmosphere containing oxygen.

3. The manufacturing method for the electrode material according to claim 1 or 2, wherein
the precursor-carrying step is a treatment in which shearing stress and centrifugal force are applied to a solution containing the carbon material and a material source for the metal compound in a revolving reaction container to cause mechanochemical reaction.

4. The manufacturing method for the electrode material according to any one of claims 1 to 3, wherein
the metal compound is any of TiO₂(B), a laminar xLiMO₂. (1-x)Li₂MnO₃ solid solution (wherein M represents one or more transition metals having an average valence number of +3, and 0<x<1), or LiCoO₂.

5. An electrode material in which a metal compound and a carbon material are conjugated, wherein
the electrode material is obtained by heating a precursor of the metal compound carried on the carbon material together with water in a closed container.

6. The electrode material according to claim 5, wherein
the metal compound is any of TiO₂(B), a laminar xLiMO₂. (1-x)Li₂MnO₃ solid solution (wherein M represents one or more transition metals having an average valence number of +3, and 0<x<1), or LiCoO₂.

7. The electrode material according to claim 5 or 6, wherein
the metal compound has two particle size distributions.

8. An electric storage device comprising an electrode formed by using the electrode material according to any one of claims 5 to 7.
